# EUROPÄISCHE PATENTSCHRIFT

(11) **EP 0 970 148 B1**
(45) Veröffentlichungstag und Bekanntmachung des Hinweises auf die Patenterteilung: **13.06.2001**
(21) Anmeldenummer: 98913679.1
(22) Anmeldetag: 06.03.1998
(51) Int. Cl.: C09B 35/64, C09B 69/10, C09B 67/22

(54) **OLIGOMERE AZOFARBSTOFFE**
OLIGOMERIC AZO DYES
COLORANTS AZO OLIGOMERIQUES

(30) Priorität: 18.03.1997 DE 19711169
(43) Veröffentlichungstag der Anmeldung: 12.01.2000
(73) Patentinhaber: BASF AKTIENGESELLSCHAFT, 67056 Ludwigshafen (DE)
(72) Erfinder: SCHRÖDER, Gunter-Rudolf, D-68259 Mannheim (DE); FREUND, Torsten, D-67117 Limburgerhof (DE); MAYER, Udo, D-67227 Frankenthal (DE); ETZBACH, Karl-Heinz, D-67227 Frankenthal (DE)
(86) Internationale Anmeldenummer: EP9801325
(87) Internationale Veröffentlichungsnummer: WO9841581

(56) Entgegenhaltungen:
- DE-A- 4 124 437
- FR-A- 2 360 635
- GB-A- 533 060
- GB-A- 785 084

## Beschreibung

Die vorliegende Erfindung betrifft oligomere Azofarbstoffe mit einem alternierenden Aufbau aus Diazokomponenten und Kupplungskomponenten, enthaltend im Molekül mindestens 3 Einheiten der Struktur I

---[D―K]--- (I)

in der D für eine Tetrazokomponente der Formel II 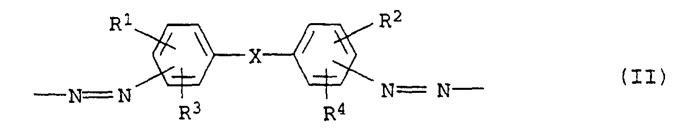 steht, in welcher
- x: eine direkte Bindung, Sauerstoff, Schwefel oder ein Brückenglied der Formel, -NHCO-, -NHCONH-, -CO-, -NHSO₂-, -SO₂NHSO₂-, -SO₂-, -SO₂-NH-A-NH-SO₂-, -NAlk-CO-, -NAlk-CO-NAlk-, -NAlk-CO-NH-, -NAlk-SO₂-, -SO₂-NAlk-SO₂-, -SO₂-NAlk-A-NAlk-SO₂-, -SO₂-NAlk-A-NH-S02-, -CH=CH-, -CH₂CH₂-, -C(CH₃)₂-, -CH₂- oder -NH-
- R¹ und R²: unabhängig voneinander Wasserstoff, C₁-C₄-Alkyl, C₁-C₄-Alkoxy, C₁-C₄-Alkanoyl, Cyano, Carboxyl, Hydroxysulfonyl, C₁-C₄-Alkoxycarbonyl, Hydroxy, Carbamoyl, Mono- oder Di-(C₁-C₄)-alkylcarbamoyl, Sulfamoyl, Mono- oder Di-(C₁-C₄)-alkylsulfamoyl, Fluor, Chlor, Brom, Nitro oder Trifluormethyl
- R³ und R⁴: unabhängig voneinander Wasserstoff, Hydroxysulfonyl oder Carboxyl,
- Alk: C₁-C₄-Alkyl, das gegebenenfalls mit Hydroxy, Cyano, Mono- oder Di-(C₁-C₄)-alkylamino, Amino, Carboxyl oder Hydroxysulfonyl substituiert ist und gegebenenfalls durch 1 Sauerstoffatom unterbrochen ist und
- A: Phenylen, das mit Hydroxysulfonyl substituiert sein kann, bedeuten und
in der K einen bivalenten Rest einer Kupplungskomponente der Formel III 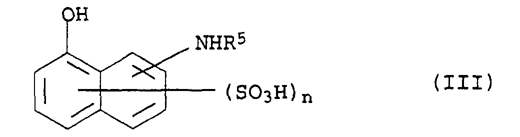 bezeichnet, in der die Variablen folgende Bedeutung haben:
- R⁵: Wasserstoff, C₁-C₄-Alkyl, das durch Hydroxy, Cyano, Carboxyl, Hydroxysulfonyl, Methoxycarbonyl, Ethoxycarbonyl oder Acetoxy substituiert sein kann,
- n: 1 oder 2,
wobei bis zu 90 mol-% der Komponente III durch eine Kupplungskomponente der Formel IV 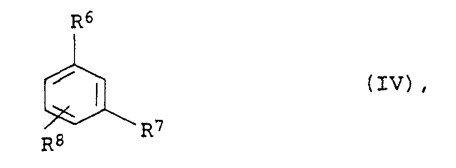 in der
- R⁶ und R⁷: unabhängig voneinander Hydroxy, Amino, Morpholino oder einen Rest NHAlk oder N(Alk)₂ und
- R⁸: Wasserstoff, Carboxyl, Hydroxysulfonyl, C₁-C₄-Alkyl, C₁-C₄-Alkoxy, C₁-C₄-Alkoxycarbonyl, Carbamoyl, Mono- oder Di-(C₁-C₄)-alkylcarbamoyl, Sulfamoyl, Mono- oder Di-(C₁-C₄)-alkylsulfamoyl oder einen Rest -NHAlk oder -N(Alk)₂ bedeuten,
ersetzt sein können,
ein Verfahren zu ihrer Herstellung, ihre Verwendung zum Färben und Bedrucken von natürlichen oder synthetischen Substraten sowie Mischungen, die die neuen Farbstoffe enthalten.

Aus der DE-A 41 24 437 sind schwarze Azofarbstoffe bekannt, die erhalten werden durch drei aufeinanderfolgende Kupplungen von 4,4'-Diaminodiphenylamin-2-sulfonsäure, Resorcin und Anilin auf 1-Amino-8-hydroxynaphthalin-3,6-disulfonsäure bzw. das jeweilige Kupplungsprodukt. Die hierbei gewählte Stöchiometrie führt zu einer Mischung verschiedener Trisazofarbstoffe.

Ferner beschreibt die DE-A 27 33 107 symmetrische Hexakisazoverbindungen, die schrittweise durch Kupplung von tetrazotierter 4,4'-Diaminostilben-2,2'-disulfonsäure mit dem durch Kupplung erhaltenen Monoazofarbstoff aus 1-Amino-5-nitrobenzol-2-sulfonsäure und 1-Amino-8-hydroxynaphthalin-3,6-disulfonsäure und nach Reduktion der Nitrogruppe des Reaktionsproduktes und sich anschließender Diazotierung in einen dritten Kupplungsschritt mit Resorcin, erhalten werden.

Diesen Farbstoffen ist gemeinsam, daß sie unbefriedigende Echtheiten aufweisen. Insbesondere bei ihrer Verwendung als Lederfarbstoffe sind die Naß- und Schweißechtheiten ungenügend.

Daher war es Aufgabe der vorliegenden Erfindung, neue Azofarbstoffe bereitzustellen, die sich durch vorteilhafte anwendungstechnische Eigenschaften insbesondere gute Naß- und Schweißechtheiten auszeichnen.

Demgemäß wurden die eingangs näher bezeichneten oligomeren Azofarbstoffe gefunden.

Da die oligomeren Azofarbstoffe mehrere Hydroxysulfonylgruppen und gegebenenfalls auch Carboxygruppen enthalten, sind auch deren Salze von der Erfindung mit umfaßt.

Als Salze kommen dabei Metall- oder Ammoniumsalze in Betracht. Metallsalze sind insbesondere die Lithium-, Natrium- oder Kaliumsalze. Unter Ammoniumsalzen im erfindungsgemäßen Sinne sind solche Salze zu verstehen, die entweder unsubstituierte oder substituierte Ammoniumkationen aufweisen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium- oder Piperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch 1 bis 3 Hydroxygruppen substituiert und/oder durch 1 bis 4 Sauerstoffatome in Etherfunktion unterbrochen sein kann.

Wenn in den obengenannten Formeln substituierte Alkylreste auftreten, so weisen sie in der Regel 1 oder 2, insbesondere einen, Substituenten auf.

Die Phenylengruppe A ist bevorzugt 1,3- oder 1,4-Phenylen. Wenn sie substituiert ist, trägt sie in der Regel 1 oder 2, bevorzugt einen Hydroxysulfonylrest.

Reste R¹, R², R⁵, R⁸ und Alk sind z.B. Methyl, Ethyl, Propyl, Isopropyl, Butyl, Isobutyl, sec.-Butyl oder tert.-Butyl.

Reste R¹, R² und R⁸ sind weiterhin z.B. Methoxy, Ethoxy, Propoxy, Isopropoxy, Butoxy, sec-Butoxy, tert-Butoxy, Methoxycarbonyl, Ethoxycarbonyl, Propoxycarbonyl, Isopropoxycarbonyl, Butoxycarbonyl, sec-Butoxycarbonyl, tert-Butoxycarbonyl, Mono- oder Dimethylcarbamoyl, Mono- oder Diethylcarbamoyl, Mono- oder Dipropylcarbamoyl, Mono- oder Dibutylcarbamoyl, Mono- oder Dimethylsulfamoyl, Mono- oder Diethylsulfamoyl, Mono- oder Dipropylsulfamoyl und Mono- oder Dibutylsulfamoyl.

Reste R¹ und R² sind weiterhin z.B. Formyl, Acetyl, Propionyl oder Butyryl.

Reste R⁵ und Alk sind weiterhin z.B. Hydroxymethyl, 2-Hydroxyethyl, 2- oder 3-Hydroxypropyl, 2- oder 4-Hydroxybutyl, Cyanomethyl, 2-Cyanoethyl, 2- oder 3-Cyanopropyl, 2- oder 4-Cyanobutyl, Carboxymethyl, 2-Carboxyethyl, 2- oder 3-Carboxypropyl, 2- oder 4-Carboxybutyl, Hydroxysulfonylmethyl, Hydroxysulfonylethyl, 2- oder 3-Hydroxysulfonylpropyl, 2- oder 4-Hydroxysulfonylbutyl.

Reste R⁵ sind weiterhin z.B. Methoxycarbonylmethyl, Methoxycarbonylethyl, 2- oder 3-Methoxycarbonylpropyl, 2- oder 4-Methoxycarbonylbutyl, Ethoxycarbonylmethyl, Ethoxycarbonylethyl, 2-oder 3-Ethoxycarbonylpropyl, 2- oder 4-Ethoxycarbonylbutyl, Acetoxymethyl, Acetoxyethyl, 2- oder 3-Acetoxypropyl oder 2- oder 4-Acetoxybutyl.

Reste Alk sind weiterhin z.B. Mono- oder Dimethylaminomethyl, 2-Mono- oder Dimethylaminoethyl, 2- oder 3-Mono- oder Dimethylaminopropyl, 2- oder 4-Mono- oder Dimethylaminobutyl, Mono- oder Diethylaminomethyl, 2-Mono- oder Diethylaminoethyl, 2- oder 3-Mono- oder Diethylaminopropyl, 2- oder 4-Mono- oder Diethylaminobutyl, Aminomethyl, 2-Aminoethyl, 2- oder 3-Aminopropyl, 2- oder 4-Aminobutyl, 2-Methoxyethyl oder 2-Ethoxyethyl.

Reste A sind z.B. 1,2-, 1,3- und 1,4-Phenylen, 2-Hydroxysulfonyl-1,3-phenylen, 2-Hydroxysulfonyl-1,4-phenylen oder 2,5-Dihydroxysulfonyl-1,4-phenylen.

Das Brückenglied X ist mit jedem seiner Enden mit den Phenylenringen in o-, m- oder p-Position zur jeweiligen Diazogruppe verknüpft. Bevorzugt werden Polyazofarbstoffe, in denen beide Verknüpfungen in p-Position sind.

Aromatische Diamine, die sich als Tetrazokomponenten eignen, sind beispielsweise 3,3'-Diaminodiphenylsulfon, 4,4'-Diaminodiphenylsulfon, 4,4'-Diaminostilben-2,2'-disulfonsäure, 2,2'-Diaminodiphenylsulfon, 2,2'-Diaminodiphenylsulfon-4,5-disulfonsäure, 4,4'-Diaminobenzophenon, 3,3'-Diamino-4,4'-dichlorbenzophenon, 4,4'- oder 3,3'-Diaminodiphenyl, 4,4'-Diamino-3,3'-dichlordiphenyl, 4,4'-Diamino-3,3'-dimethoxy- oder -3,3'-dimethyl- oder -2,2'-dimethyl- oder -2,2'-dichlor- oder -3,3'-diethoxydiphenyl, 4,4'-Diaminodiphenyl-2,2'- oder -3,3'-disulfonsäure, 4,4'-Diaminodiphenyl-2,2'- oder -3,3'-dicarbonsäure, 4,4'-Diamino-3-ethoxy- oder -3-hydroxysulfonyldiphenyl, 4,4'-Diaminodiphenylmethan, 4,4'-Diamino-3,3'-dimethyldiphenylmethan, 4,4'-Diaminodiphenylethan, 4,4'-Diaminostilben oder 4,4'-Diaminodiphenylmethan-3,3'-dicarbonsäure, 4,4'-Diaminodiphenylamin, 4,4'-Diaminodiphenylamin-2-sulfonsäure, 4,4'-Diaminodisulfanilamid und N-(4-Aminophenyl)-4-aminobenzolsulfonamid.

Im folgenden wurden beispielhaft Aminonaphtholsulfonsäuren als Kupplungskomponente III aufgeführt. Im einzelnen sind z.B. 1-Amino-5-hydroxynaphthalin-7-sulfonsäure, 1-Amino-8-hydroxynaphthalin-4-sulfonsäure, 1-Amino-8-hydroxynaphthalin-3,6-disulfonsäure, 1-Amino-8-hydroxynaphthalin-4,6-disulfonsäure, 2-Amino-5-hydroxynaphthalin-7-sulfonsäure, 2-Amino-8-hydroxynaphthalin-6-sulfonsäure, 2-Amino-8-hydroxynaphthalin-3,6-disulfonsäure, 2-Amino-5-hydroxynaphthalin-1,7-disulfonsäure, 1-Hydroxysulfonylmethylamino-8-hydroxynaphthalin-3,6-disulfonsäure, 2-Methylamino-8-hydroxynaphthalin-6-sulfonsäure, 2-Methylamino-8-hydroxynaphthalin-6-sulfonsäure, 2-Hydroxysulfonylmethylamino-8-hydroxynaphthalin-6-sulfonsäure zu nennen.

Kupplungskomponenten der Formel IV umfassen insbesondere Resorcin, 1,3-Phenylendiamin, 3-Aminophenol, 4-Methyl-3-aminophenol, 2,4-Dihydroxybenzoesäure, 2,4-Diaminobenzolsulfonsäure, 5-Amino-2-methylphenol, 4-Chlor-3-aminophenol und 2,4-Diaminotoluol.

Bevorzugt werden oligomere Azofarbstoffe, in denen X eine direkte Bindung oder ein Brückenglied der Formel -NHCO-, -NHCONH-, -NHSO₂-, -SO₂-, -CH=CH-, -CH₂CH₂-, -CH₂- und -NH- und insbesondere ein Brückenglied der Formel -CH=CH-, -NH- oder -SO₂NH- ist.

Ferner werden oligomere Azofarbstoffe bevorzugt, in denen R¹ und R² unabhängig voneinander Wasserstoff, Hydroxysulfonyl, Carboxyl, Sulfamoyl oder Mono- oder Di-(C₁-C₄)-alkylsulfamoyl, insbesondere Wasserstoff oder Hydroxysulfonyl, bedeuten. Besonders bevorzugt stehen R³ und R⁴ in Kombination mit diesen Resten für Wasserstoff.

In einer Ausführungsform der vorliegenden Erfindung enthalten die oligomeren Azofarbstoffe nur bivalente Reste K der Kupplungskomponenten der Formel III. Bevorzugt werden jedoch oligomere Azofarbstoffe, deren bivalente Reste K sich von Kupplungskomponenten der Formel III und der Formel IV ableiten, wobei der Anteil letzterer bis zu 90 Mol-% der Summe aller Kupplungskomponenten betragen kann.

Bevorzugt werden oligomere Azofarbstoffe, in denen der Anteil der Kupplungskomponente IV 10 bis 75 mol-% des bivalenten Restes K beträgt, also 10 bis 75 mol-% der Komponente III durch die Komponente IV ersetzt sind.

Besonders bevorzugt werden oligomere Azofarbstoffe, in denen 30 bis 60 mol-% der Aminonaphtholsulfonsäuren III durch die Komponente IV ersetzt sind.

Oligomere Azofarbstoffe mit 1-Amino-8-hydroxynaphthalin-4,6-disulfonsäure, 2-Amino-8-hydroxynaphthalin-6-sulfonsäure, 3-Amino-8-hydroxynaphthalin-6-sulfonsäure und vor allem mit 1-Amino-8-hydroxynaphthalin-3,6-disulfonsäure als Kupplungskomponenten III werden generell bevorzugt.

Bei der Herstellung der oligomeren Azofarbstoffe kann eine einzelne Tetrazokomponente wie auch ein Gemisch verschiedener Tetrazokomponenten der Formel II verwendet werden. Ebenso werden auch oligomere Azofarbstoffe, die durch Gemisch mehrerer Kupplungskomponenten III und/oder Kupplungskomponenten IV erhalten werden, von den Ansprüchen mit umfaßt. Die Verwendung eines Aminonaphtholsäuregemischs ermöglicht die gezielte Synthese schwarzer Lederfarbstoffe mit einem blauen oder roten Farbstich.

Die erfindungsgemäßen Azofarbstoffe lassen sich durch die Folge eines basischen auf einen sauren Kupplungsschritt herstellen.

Im ersten sauren Kupplungsschritt wird ein zuvor diazotiertes Amin der Formel V 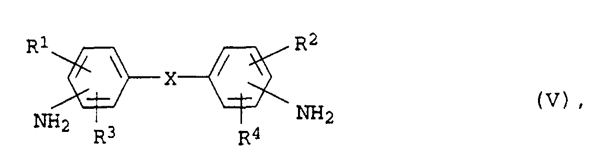 in der R¹, R², R³, R⁴ und X die obengenannte Bedeutung haben, auf die Kupplungskomponente K zur "Monomereinheit" gekuppelt, die im zweiten Schritt, je nach gewählter Stöchiometrie mit und ohne Zugabe weiterer Tetrazokomponente, unter basischen Bedingungen polykondensiert.

Beispielsweise sind die erfindungsgemäßen Azofarbstoffe erhältlich, indem man 1 Mol-Äquivalent eines Diamins der Formel V 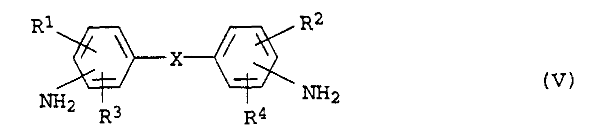 tetrazotiert und mit 0,97 bis 1,03 Mol-Äquivalenten einer Kupplungskomponente III, wobei bis zu 90 mol-% der Komponente III durch eine Komponente IV ersetzt sein können, im sauren Medium kuppelt und anschließend im basischen Medium polykondensiert.

Nach einer anderen Verfahrensvariante setzt man 1 Moläquivalent eines tetrazotierten Diamins V mit 0,97 bis 1,03 Mol-Äquivalenten einer Kupplungskomponente der Formel VI 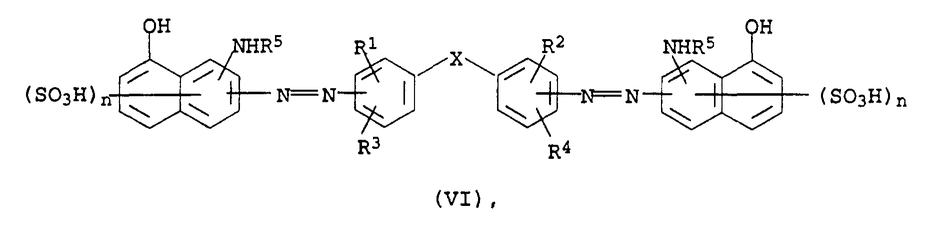 in der R¹, R², R³, R⁴, R⁵, X und n die obengenannte Bedeutung haben, im alkalischen Medium zum Polykondensationsprodukt um, wobei bis zu 60 mol-% der Komponente VI durch eine Komponente IV ersetzt sein können. Die Kupplungskomponente VI kann dabei auf eine dem Fachmann geläufige Weise schrittweise aufgebaut werden.

In einer vorteilhaften Variante sind die oligomeren Azofarbstoffe erhältlich, indem man 1 Moläquivalent eines Diamins V tetrazotiert und mit 1,95 bis 2,05 Moläquivalenten einer Kupplungskomponente III im sauren Medium kuppelt und anschließend y Moläquivalente einer Kupplungskomponente IV zusetzt und die Mischung mit 1 + y Moläquivalenten eines zuvor tetrazotierten Diamins basisch polykondensiert, wobei y für eine Zahl von 0 bis 0,6 steht.

Besonders bevorzugt werden Verfahren, bei denen man 1 Mol tetrazotiertes Diamin V mit 0,99 - 1,01 Mol, insbesondere mit äquimolarer Menge, der Kupplungskomponente III oder VI zum Polykondensationsprodukt umsetzt, wobei wie oben angegeben, Teile der Kupplungskomponente durch die Komponente IV ersetzt sein können.

Die Zugabe der Kupplungskomponente kann portionsweise erfolgen. Die Tetrazotierung der Diamine erfolgt auf an sich bekannte Weise, z.B. mit Natriumnitrit unter sauren Bedingungen für gewöhnlich bei Temperaturen von -5°C bis 25°C. Das Nitrit wird in der Regel im Überschuß eingesetzt und der Nitritüberschuß nach der Tetrazotierung beispielsweise mit Amidosulfonsäure zerstört.

Für die Kupplungsschritte arbeitet man zweckmäßig in wäßrigem Medium. Die Temperatur beträgt bei beiden Schritten in der Regel von -5 bis 25°C.

Im sauren Kupplungsschritt liegt der pH-Wert im Bereich von 0 bis 4, bevorzugt ist ein pH-Wert < 2. Die Kupplungsdauer beträgt mindestens 15 Minuten, wobei eine Dauer von 15 Stunden normal nicht überschritten wird. In der Regel ist sie nach 2 bis 3 Stunden beendet.

Man führt die basische Kupplung bis zum vollständigen Umsatz durch. Durch die Abnahme der Tetrazokomponente läßt sich das Reaktionsende leicht ermitteln. Üblicherweise ist der Endpunkt nach ca. 15 Minuten bis 2 Stunden nach letzter Zugabe erreicht.

Längere Nachrührzeiten sind möglich, haben aber in der Regel keinen Einfluß auf den Polymerisationsgrad. Aus Sicherheitsgründen empfiehlt es sich, die Reaktionsmischung nach erfolgter Kupplung kurz auf Temperaturen um 50°C aufzuheizen, um letzte Spuren Diazokomponente zu zerstören.

Der basische Kupplungsschritt wird bei einem pH-Wert oberhalb 7, bevorzugt in einem Bereich von 7,5 bis 13 durchgeführt. Die Einstellung der gewünschten pH-Werte in Richtung höherer Werte, sowie gegebenenfalls das Konstanthalten während der Kupplung erfolgt wie allgemein bekannt durch Zugabe von Ammonium- oder Alkalimetallbasen, z.B. Natrium- oder Kaliumhydroxyd, -carbonat oder -acetat.

Im Polykondensationsschritt stellt man sich den Kettenabbruch z.B. durch weitere Kupplung auf eine Kupplungskomponente vor, die kein reaktionsfähiges Ende mehr besitzt, oder durch Zersetzung von Diazoniumsalz. Die Abbruchreaktion kann jedoch auch gezielt durch Zugabe einer monofunktionellen Diazokomponente oder einer nur einfach kuppelnden Kupplungskomponente beeinflußt werden. Ihre Wirkungsweise ist der eines "Reglers" vergleichbar und führt zu einer Herabsetzung des Polykondensationsgrades.

Monofunktionelle Kupplungskomponenten sind nur einfach zur Kupplung befähigt und sind z.B. Phenol, o- oder m-Toluidin, o- oder m-Anisidin, Kresidin, 2,5-Dimethylanilin, 2,5-Dimethoxyanilin, m-Aminoacetanilid, 3-Amino-4-methoxyacetanilid, 3-Amino-4-methylacetanilid, m-Aminophenylharnstoff, N-Methylanilin, N-Methyl-m-toluidin, N-Ethylanilin, N-Ethyl-m-toluidin, Phenol, Methylphenol und Hydroxybenzoesäure.

Man setzt sie nach erfolgter saurer Kupplung dem Reaktionsgemisch in der Regel in einer k-molaren Menge, bezogen auf 1 Mol Ausgangsdiamin ein, wobei k eine Zahl 0,001 bis 0,05 ist und der Anteil der Kupplungskomponente um 0,5 k verringert ist.

Verwendet man im anderen Fall eine monofunktionelle Diazokomponente als Molekulargewichtsregler, so werden 0,5 k Mol des Diamins durch ein k Mol eines Monoamins ersetzt bezogen auf 1 Mol Kupplungskomponente.

Geeignete Monoamine aus der Anilinreihe sind z.B. Anilin und substituierte Aniline wie 2-Methoxyanilin, 2-Methylanilin, 4-Chlor-2-aminoanisol, 2,5-Dimethoxyanilin, 2,5-Dimethylanilin, 2,4-Dimethylanilin, 2,5-Diethoxyanilin, 2-Chloranilin, 3-Chloranilin, 4-Chloranilin, 2,5-Dichloranilin, 4-Chlor-2-nitroanilin, 4-Chlor-2-methylanilin, 3-Chlor-2-methylanilin, 4-Chlor-2-aminotoluol, 2-Phenylsulfonylanilin, 4-Methylsulfonylanilin, 2,4-Dichloranilin-5-carbonsäure, 2-, 3- oder 4-Aminobenzoesäure, 3-Chloranilin-6-carbonsäure, Anilin-2- oder -3- oder -4-sulfonsäure, Anilin-2,5-disulfonsäure, Anilin-2,4-disulfonsäure, Anilin-3,5-disulfonsäure, 2-Aminotoluol-4-sulfonsäure, 2-Aminoanisol-4-sulfonsäure, 2-Aminoanisol-5-sulfonsäure, 2-Ethoxyanilin-5-sulfonsäure, 2-Ethoxyanilin-4-sulfonsäure, 2,5-Dimethoxyanilin-4-sulfonsäure, 2,4-Dimethoxyanilin-5-sulfonsäure, 2-Methoxy-5-methylanilin-4-sulfonsäure, 4-Aminoanisol-3-sulfonsäure, 4-Aminotoluol-3-sulfonsäure, 2-Aminotoluol-5-sulfonsäure, 2-Chloranilinsulfonsäure, 2-Chloranilin-5-sulfonsäure, 2-Bromanilin-4-sulfonsäure, 2,6-Dichloranilin-4-sulfonsäure, 2,6-Dimethylanilin-3- oder -4-sulfonsäure, 3-Acetylaminoanilin-6-sulfonsäure, 4-Acetylaminoanilin-2-sulfonsäure, 2-Aminophenol-4-sulfonsäure und 2-Aminophenol-5-sulfonsäure.

Der Polykondensationsgrad der erfindungsgemäßen Azofarbstoffe ist abhängig von Synthesebedingungen, den Einsatzstoffen und ihrer Stöchiometrie. Es ist jedoch anzunehmen, daß der Polykondensationsgrad aufgrund von Abbruchreaktionen 100 nicht übersteigt.

Besonders bevorzugt werden oligomere Azofarbstoffe, deren mittlerer Polykondensationsgrad größer als 3 ist.

Die durch die oben beschriebenen Verfahren erhältlichen Azofarbstoffe sind Mischungen mit einem gemittelten Polykondensationsgrad. Ihre Auftrennung ist möglich, jedoch nicht notwendig. Vorteilhaft werden die durch das erfindungsgemäße Verfahren erhältlichen Farbstoffgemische ohne weitere Auftrennung verwendet.

Die erfindungsgemäßen oligomeren Azofarbstoffe sind bei pH-Werten oberhalb 8 gut wasserlöslich.

Die erfindungsgemäßen Farbstoffe eignen sich in vorteilhafter Weise zum Färben von natürlichen oder synthetischen Substraten, beispielsweise von Baumwolle, Wolle, Polyamid und insbesondere Leder. Ferner sind sie als Papierfarbstoffe für Massefärbung und Aufzeichnungsflüssigkeiten wie Tinten, insbesondere für den Inkjet, geeignet.

Man erhält Färbungen mit guten Naß- und Schweißechtheiten.

Die neuen Farbstoffe können sowohl alleine wie auch in Mischung miteinander oder auch in Mischung mit anderen Farbstoffen zur Anwendung gelangen.

Die folgenden Beispiele sollen die Erfindung näher erläutern.

### Beispiel 1

a) 25 mMol 4,4'-Diamino(diphenylamin)-2-sulfonsäure wurden in 50 ml Wasser und 25 ml Salzsäure (5 molar) eine Stunde bei Raumtemperatur gerührt. Es wurden 50 g Eis und 15,5 ml einer Natriumnitritlösung (23 gew.-%ig, 3,33 molar) zugegeben und eine Stunde bei 0-5 °C gerührt. Der Nitritüberschuß wurde mit Amidosulfonsäure entfernt und mit Natriumhydrogencarbonat ein pH-Wert von 2 eingestellt, wodurch die Lösung der Tetrazokomponente erhalten wurde.
b) Man löste eine Mischung aus 6,25 mMol 1-Amino-8-naphthol-3,6-disulfonsäure und 18,75 mMol Resorcin (Kupplungskomponente IV) bei pH 6-7 in 100 ml Wasser und tropfte diese in die eiskalte Lösung der Diazoniumkomponente von pH 2. Es wurde 2,5 Stunden bei pH 1-3 und 5-10°C nachgerührt. Der pH-Wert wurde dann langsam mit 50 gew.-%iger Natronlauge auf 8-9 angehoben, und es wurden weitere zwölf Stunden gerührt. Die Reaktionsmischung wurde zwei Stunden auf 50°C erwärmt, der pH-Wert mit 37 gew.-%iger Salzsäure auf 1,5 abgesenkt und der ausgefallene Feststoff isoliert.

Analog Beispiel 1 wurden mit den in Tabelle 1 aufgeführten Diaminen (x mMol), 1-Amino-8-naphthol-3,6-disulfonsäure (y mMol) und Kupplungskomponente IV (z mMol) Farbstoffe erhalten. Sie färben Leder mit guten Echtheiten. Es wurde die Farbe auf Reinchromleder angegeben.

**Tabelle 1**

| Bsp. | Diaurin | Kupplungskomp. IV | x | y | z | Farbe |
|---|---|---|---|---|---|---|
| 1.1 | 4,4'-Diamino(diphenylamin)-2-sulfonsäure | Resorcin | 25 | 6,25 | 18,75 | rotstichig schwarz |
| 1.2 | 4,4'-Diamino(diphenylamin)-2-sulfonsäure | Resorcin | 25 | 12,5 | 12,5 | schwarz |
| 1.3 | 4,4'-Diamino(diphenylamin)-2-sulfonsäure | Resorcin | 25 | 18,75 | 6,25 | blaustichig schwarz |
| 1.4 | 4,4'-Diamino(diphenylamin)-2-sulfonsäure | 1.3-Phenylendiamin diamin | 25 | 6,25 | 18,75 | blaustichig schwarz |
| 1.5 | 4,4'-Diamino(diphenylamin)-2-sulfonsäure | 1,3-Phenylendiamin | 25 | 12,5 | 12,5 | schwarz |
| 1.6 | 4,4'-Diamino(diphenylamin)-2-sulfonsäure | 1,3-Phenylendiamin | 25 | 18,75 | 6,25 | blaustichig schwarz |
| 1.7 | 4,4'-Diamino(diphenylamin)-2-sulfonsäure | 3-Aminophenol | 25 | 6,25 | 18,75 | blau |
| 1.8 | 4,4'-Diamino(diphenylamin)-2-sulfonsäure | 3-Aminophenol | 25 | 12,5 | 12,5 | blaustichig schwarz |
| 1.9 | 4,4'-Diamino(diphenylamin)-2-sulfonsäure | 3-Aminophenol | 25 | 18,75 | 6,25 | blau |
| 1.10 | 4,4'-Diaminostilben-2,2'-disulfonsäure | Resorcin | 50 | 25 | 25 | rotstichig schwarz |

### Beispiel 2

0,025 mol 4,4'-Diamino(diphenylamin)-2-sulfonsäure wurden analog Beispiel la) tetrazotiert. Man löste 0,00625 mol 1-Amino-8-naphthol-3,6-disulfonsäure (KK1) bei pH 6-7 in 50 ml Wasser und tropfte diese Lösung in die eiskalte Lösung der Diazoniumkomponente von pH 2. Man rührte bei einem pH-Wert von 1-2 und 0-5°C zwei Stunden nach. Anschließend wurden 0,01875 mol Resorcin (Kupplungskomponente IV) zugegeben und weitere 0,25 Stunden gerührt. Der pH-Wert wurde mit 50 gew.-%iger Natronlauge auf 8-11 eingestellt. Die Reaktionsmischung wurde zwölf Stunden bei Raumtemperatur gerührt. Die Reaktionsmischung wurde zwei Stunden auf 50°C erwärmt, der pH-Wert mit 37 gew.-%iger Salzsäure auf 1,5 abgesenkt und der ausgefallene Feststoff isoliert.

Analog Beispiel 2 wurden Farbstoffe mit den in Tabelle 2 angegebenen Diaminen (25 mMol), 1-Amino-8-naphthol-3,6-disulfonsäure (x mMol) und Kupplungskomponente IV (y mMol) hergestellt.

**Tabelle 2**

| Bsp. | Diamin | Kupplungskomp. IV | x | y | Farbe |
|---|---|---|---|---|---|
| 2.1 | 4,4'-Diamino(diphenylamin)-2-sulfonsäure | 1,3-Phenylendiamin | 6,25 | 18,75 | rotstichig schwarz |
| 2.2 | 4,4'-Diamino(diphenylamin)-2-sulfonsäure | 1,3-Phenylendiamin | 12,5 | 12,5 | schwarz |
| 2.3 | 4,4'-Diamino(diphenylamin)-2-sulfonsäure | 1,3-Phenylendiamin | 18,75 | 6,25 | blau |
| 2.4 | 4,4'-Diamino(diphenylamin)-2-sulfonsäure | 3-Aminophenol | 6,25 | 18,75 | rotstichig rotstichig grau |
| 2.5 | 4,4'-Diamino(diphenylamin)-2-sulfonsäure | 3-Aminophenol | 12,5 | 12,5 | rotstichig grau |
| 2.6 | 4,4'-Diamino(diphenylamin)-2-sulfonsäure | 3-Aminophenol | 18,75 | 6,25 | blau |
| 2.7 | 4,4'-Diamino(diphenylamin)-2-sulfonsäure | Resorcin | 6,25 | 18,75 | rotstichig grau |
| 2.8 | 4,4'-Diamino(diphenylamin)-2-sulfonsäure | Resorcin | 12,5 | 12,5 | rotstichig grau |
| 2.9 | 4,4'-Diamino(diphenylamin)-2-sulfonsäure | Resorcin | 18,75 | 6,25 | blau |
| 2.10 | 4-Amino-N-(4-aminophenyl)benzolsulfonamid | Resorcin | 6,25 | 18,75 | beige |
| 2.11 | 4-Amino-N-(4-aminophenyl)benzolsulfonamid | Resorcin | 12,5 | 12,5 | olivbraun |
| 2.12 | 4-Amino-N-(4-aminophenyl)benzolsulfonamid | Resorcin | 18,75 | 6,25 | blau |
| 2.13 | 4-Amino-N-(4-aminophenyl)benzolsulfonamid | 3-Aminophenol | 6,25 | 18,75 | beige |
| 2.14 | 4-Amino-N-(4-aminophenyl)benzolsulfonamid | 3-Aminophenol | 12,5 | 12,5 | olivebraun |
| 2.15 | 4-Amino-N-(4-aminophenyl)benzolsulfonamid | 3-Aminophenol | 18,75 | 6,25 | blau |
| 2.16 | 4,4'-Diamino(diphenylamin)-2-sulfonsäure | 1,3-Phenylendiamin | 6,25 | 18,75 | beige |
| 1.17 | 4,4'-Diamino(diphenylamin)-2- sulfonsäure | 1,3-Phenylendiamin diamin | 12,5 | 12,5 | braun |
| 2.18 | 4,4'-Diamino(di phenylamin)-2-sulfonsäure | 1,3-Phenylendiamin | 18,75 | 6,25 | braun |

### Beispiel 3

a) 13,96 g (0,05 mol) 5-Amino-2-[(4-aminophenyl)amino]-benzol-sulfonsäure wurden in 100 ml Wasser und 50 ml 5 N Salzsäure 1 h bei Raumtemperatur gerührt. Man gab 100 g Eis hinzu und versetzte dann mit 31 ml einer 3,3 molaren Natriumnitritlösung. Man ließ 45 min nachrühren, entfernte den Nitritüberschuß mit Amidosulfonsäure und stellte dann mit Natriumcarbonat einen pH-Wert von 2 ein.
b) Zu dieser Suspension tropfte man innerhalb von 30 min eine Lösung von 15,49 g (0,0485 mol) 1-Amino-8-naphthol-3,6-disulfonsäure in 200 ml Wasser, welche durch Einstellen des pH-Wertes mit 50 gew.-%iger Natronlauge auf pH 6-7 hergestellt worden war. Man ließ 2 h nachrühren und stellte dann mit 20 Gew.-%iger Natronlauge auf pH 10-12. Nach einer weiteren Nachrührzeit von 15 h wurde mit konzentrierter Salzsäure auf pH 2 gestellt und mit Kaliumchlorid ausgesalzen. Der entstandene polymere Farbstoff wurde isoliert und getrocknet. Man erhielt 29,5 g (95 % d.Th.) eines schwarzen Pulvers, mit dem Leder in grauschwarzen Farbtönen gefärbt werden konnte. Die Färbungen wiesen hohe Naßechtheiten auf.

Analog wurden mit den in Tabelle 3 aufgeführten Diaminen und Kupplungskomponenten polymere Farbstoffe mit guten Naßechtheiten hergestellt.

**Tabelle 3**

| Bsp. | Diamin | Kupplungskomponente | Farbe |
|---|---|---|---|
| 3.1 | 50 mMol 4-Amino-N-(4-aminophenyl)-benzolsulfonamid | 48,5 mMol 1-Amino-8-hydroxy-3,6-naphthalindisulfonsäure | dunkelviolett |
| 3.2 | 50 mMol 4,4'-Diaminostilben | 48,5 mMol 1-Amino-8-hydroxy-3,6-naphthalindisulfonsäure | marineblau |
| 3.3 | 50 mMol 4,4'-Diaminostilben-2,2'-disulfonsäure | 48,5 mMol 1-Amino-8-hydroxy-3,6-naphthalindisulfonsäure | blau |
| 3.4 | 50 mMol 5-Amino-2-[(4-aminophenyl)-amino]benzolsulfonsäure | 48,5 mMol 1-Amino-8-naphthol-4-sulfonsäure | grünst. grau |
| 3.5 | 50 mMol 4-Amino-N-(4-aminophenyl)-benzolsulfonamid | 48,5 mMol 1-Amino-8-naphthol-4-sulfonsäure | blaust. grau |
| 3.6 | 50 mMol 4,4'-Diaminostilben | 48,5 mMol 1-Amino-8-naphthol-4-sulfonsäure | beige |
| 3.7 | 50 mMol 4,4'-Diaminostilben-2,2'-disulfonsäure | 48,5 mMol 1-Amino-8-naphthol-4-sulfonsäure | grünst. grau |
| 3.8 | 50 mMol 5-Amino-2-[(4-aminophenyl)-amino]benzolsulfonsäure | 48,5 mMol 1-Amino-8-naphthol-4,6-disulfonsäure | blaust. grau |
| 3.9 | 50 mMol 4-Amino-N-(4-aminophenyl)-benzolsulfonamid | 48,5 mMol 1-Amino-8-naphthol-4,6-disulfonsäure | marine-blau |
| 3.10 | 50 mMol 4,4'-Diaminostilben | 48,5 mMol 1-Amino-8-naphthol-4,6-disulfonsäure | schwarz |
| 3.11 | 50 mMol 4,4'-Diaminostilben-2,2'-disulfonsäure | 48,5 mMol 1-Amino-8-naphthol-4,6-disulfonsäure | schwarz |
| 3.12 | 25 mMol Bis(4-aminobenzolsulfonsäure)imid | 25 mMol 1-Amino-8-naphthol-3,6-disulfonsäure | marine-blau |
| 3.13 | 25 mMol Bis(4-aminobenzolsulfonsäure)imid | 25 mMol 1-Amino-8-naphthol-4,6-disulfonsäure | violett |

### Beispiel 4

a) 9,26 g (0,025 mol) 4,4'-Diaminostilben-2,2'-disulfonsäure (Diamin 1) wurden in einer Mischung aus 75 ml Wasser und 2,75 ml 50 Gew.-%iger Natronlauge gelöst und mit 15,5 ml einer 3,3 molaren Natriumnitritlösung versetzt. Diese Lösung ließ man in eine Mischung aus 20 ml konzentrierter Salzsäure und 100 g Eis einlaufen. Man ließ 3 h bei 0-5°C nachrühren und entfernte dann den Nitritüberschuß mit Amidosulfonsäure. Die auf diese Weise tetrazotierte 4,4'-Diaminostilben-2,2'-disulfonsäure wurde mit Natriumhydrogencarbonat auf pH 2 gestellt.
b) Man bereitete eine Lösung von 15,97 g (0,05 mol) 1-Amino-8-naphthol-3,6-disulfonsäure (Kupplungskomponente III) in 200 ml Wasser, indem man mit 50 gew.-%iger Natronlauge einen pH-Wert von 6-7 einstellte. Diese Lösung ließ man zu der unter a) beschriebenen Tetrazoniumlösung innerhalb von 30 min bei 15-10°C zutropfen. Dabei stieg der pH-Wert auf 2,8. Man ließ 2 h bei 10°C und 15 h bei Raumtemperatur nachrühren. Zu dieser Lösung wurden 0,914 g (0,0083 mol) festes Resorcin (Kupplungskomponente IV) gegeben und dieses 15 min verrührt.
c) Es wurden 8,76 g (0,033 mol) 4-Amino-N-(4-aminophenyl)benzolsulfonamid (Diamin 2) in 67 ml Wasser und 33,3 ml 5N Salzsäure vorgelegt. Es wurden 67 g Eis und 20,7 ml einer 3,3 molaren Natriumnitritlösung hinzugegeben. Man ließ 1 h bei 0-5°C nachrühren und entfernte dann den Nitritüberschuß mit Amidosulfonsäure. Die so hergestellte Diazoniumlösung wurde bei 5-10°C zu der unter b) erhaltenen Mischung gegeben. Man stellte mit 50 gew.-%iger Natronlauge auf pH 9,5-10 und ließ 2 h bei 5-10°C, dann 15 h bei Raumtemperatur nachrühren. Man erwärmte die entstandene Suspension auf 50°C, ließ 90 min bei dieser Temperatur nachrühren, filtrierte dann den Farbstoff ab und trocknete diesen. Man erhielt 37,6 g (96 % d.Th.) eines braunschwarzen Pulvers, mit welchem Chromrindleder schwarz gefärbt werden konnte.

Analog Beispiel 4 wurden mit den in Tabelle 4 aufgeführten Diaminen 1 (25 mMol), Diaminen 2 (y mMol), Kupplungskomponenten III (50 mMol) und Kupplungskomponenten IV (x mMol) Farbstoffe hergestellt, die Leder in rot- bzw. blau/violettstichigem schwarzen Farbton färben und sich durch gute Naßechtheiten auszeichnen.

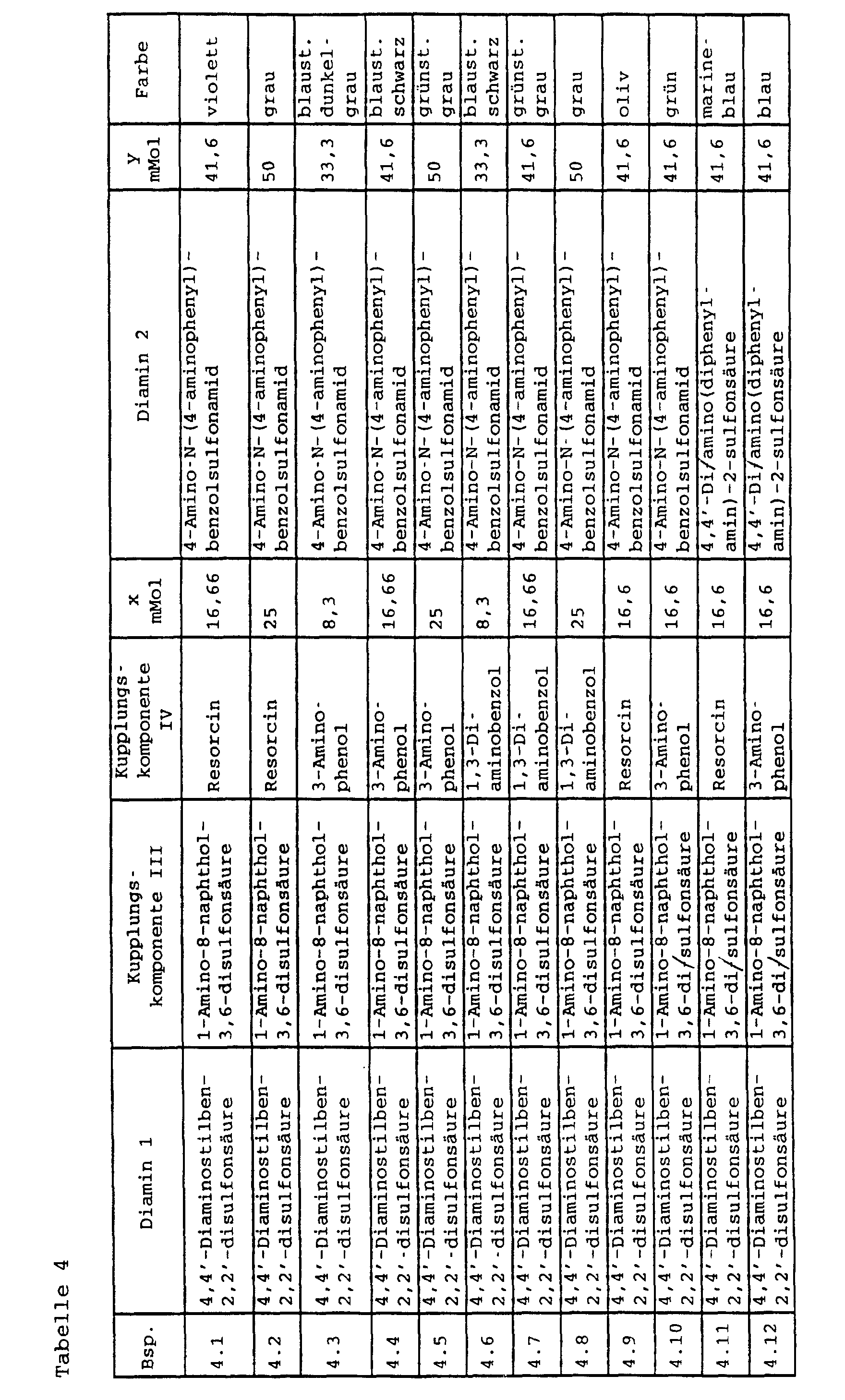

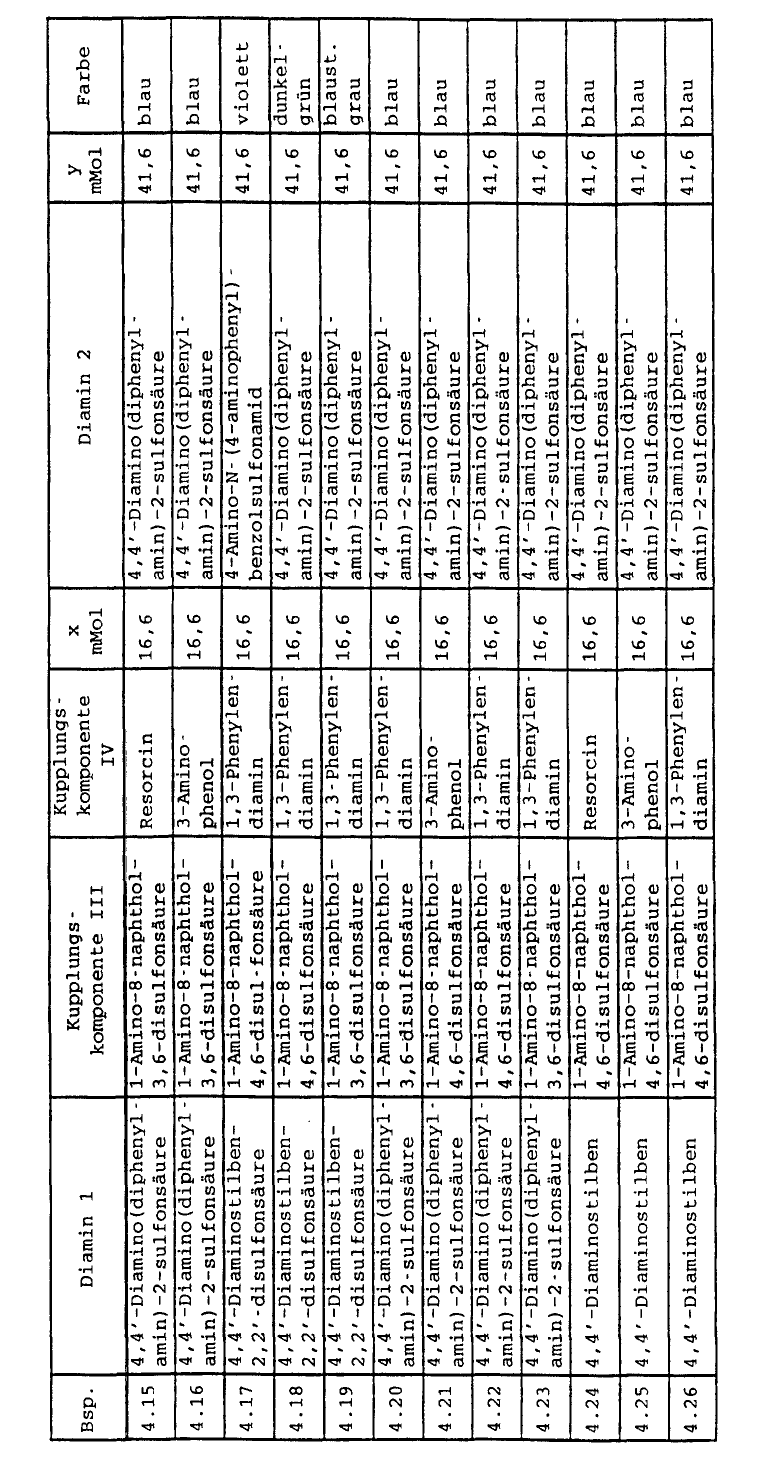

### Beispiel 5

a) 9,26 g (0,025 mol) 4,4'-Diaminostilben-2,2'-disulfonsäure (Diamin 1) wurden in einer Mischung aus 75 ml Wasser und 2,75 ml 50 Gew.-%iger Natronlauge gelöst und mit 15,5 ml einer 3,3 molaren Natriumnitritlösung versetzt. Diese Lösung ließ man in eine Mischung aus 20 ml konzentrierter Salzsäure und 100 g Eis einlaufen. Man ließ 3 h bei 0-5°C nachrühren und entfernte dann den Nitritüberschuß mit Amidosulfonsäure. Die auf diese Weise diazotierte 4,4'-Diaminostilben-2,2'-disulfonsäure wurde mit Natriumhydrogencarbonat auf pH 2 gestellt.
i b) Man bereitete eine Lösung von 15,97 g (0,05 mol) 1-Amino-8-naphthol-3,6-disulfonsäure (KK) in 200 ml Wasser, indem man mit 50 gew.-%iger Natronlauge einen pH-Wert von 6-7 einstellte. Diese Lösung ließ man zu der unter a) beschriebenen Diazoniumlösung innerhalb von 30 min bei 15-10°C zutropfen. Dabei stieg der pH-Wert auf 2,8. Man ließ 2 h bei 10°C und 15 h bei Raumtemperatur nachrühren. Zu dieser Reaktionsmischung wurde eine Lösung von 9,26 g (0,025 mol) gemäß a) tetrazotierten 4,4'-Diaminostilben-2,2'-disulfonsäure (Diamin 2) innerhalb von 60 min bei 0-5°C zugetropft. Dabei wurde mit 50 gew.-%iger Natronlauge der pH-Wert bei 8,5 gehalten. Man rührte 2 h bei 5-10°C und anschließend 15 h bei Raumtemperatur. Man erwärmte die entstandene Suspension auf 50°C, ließ 90 min bei dieser Temperatur nachrühren, filtrierte dann den Farbstoff ab und trocknete diesen. Man erhielt 33,4 g (94 % d.Th.) eines braunschwarzen Pulvers, das Chromrindleder in einem blaustichigen Schwarzfarbton mit guten Naßechtheiten färbte.

Analog Beispiel 5 wurden mit den in Tabelle 5 aufgeführten Diaminen 1 (25 mMol), Diaminen 2 (25 mMol) und Kupplungskomponenten (50 mMol) Farbstoffe hergestellt, die Leder in rot- bzw. blau/violettstichigem schwarzen Farbton färben und sich durch gute Naß- und Lichtechtheiten auszeichnen.

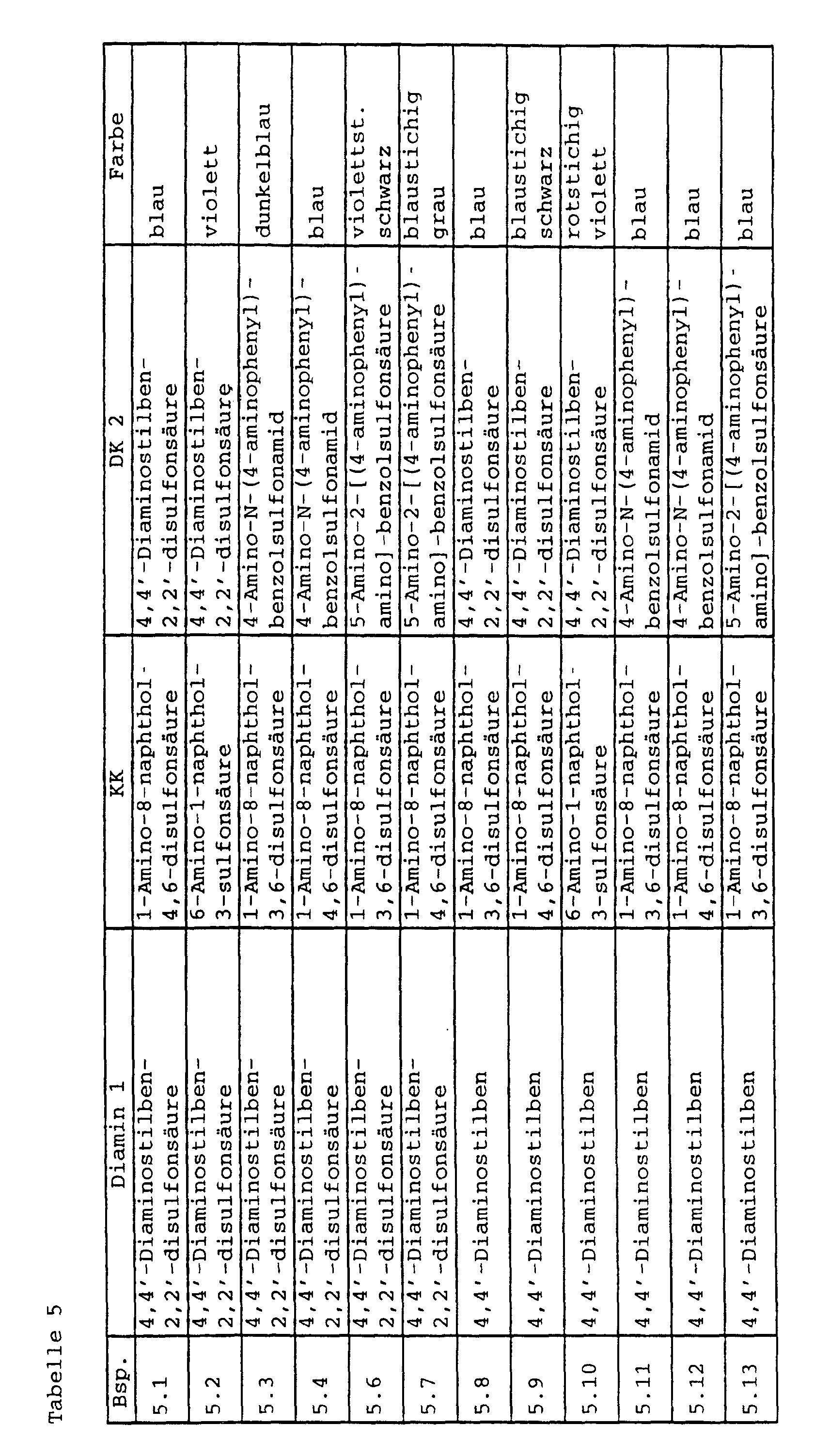

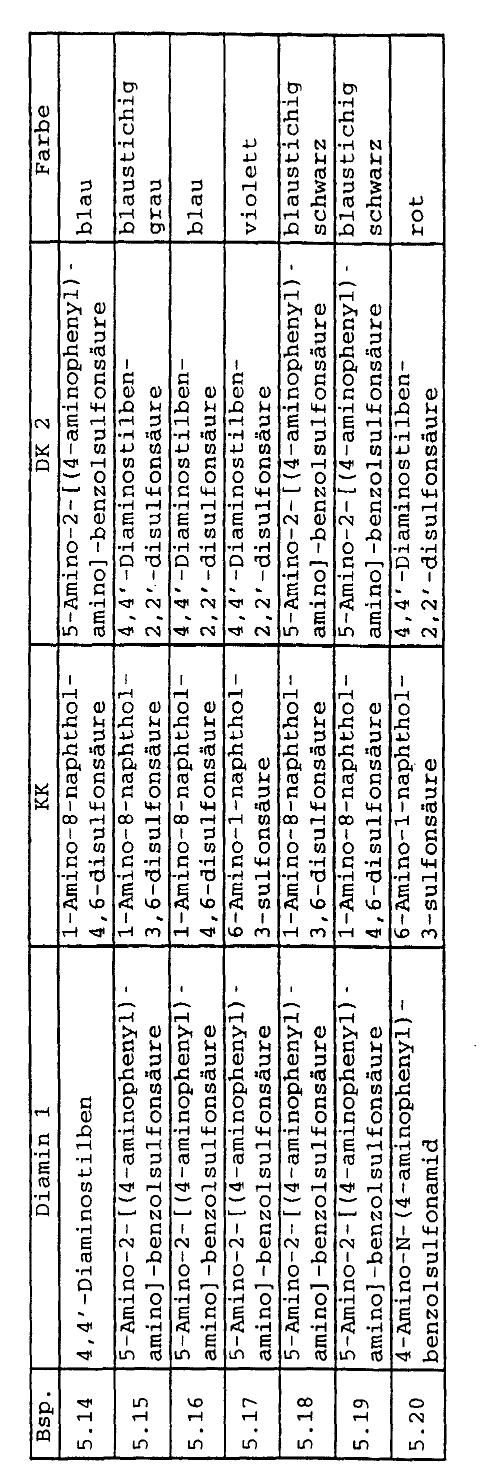

### Beispiel 6

Man löste eine Mischung aus 0,0375 mol 1-Amino-8-naphthol-3,6-disulfonsäure (Kupplungskomponente KK 1) und 0,0125 mol 3-Amino-8-naphthol-6-sulfonsäure (Kupplungskomponente KK 2) durch Zugabe von Natronlauge bei pH=6-7 in 100 ml Wasser. Die so hergestellte Lösung wurde zur Tetrazoniumlösung von zuvor analog Beispiel la) tetrazotierter 0,025 mol 4,4'-Diamino(diphenylamin)-2-sulfonsäure (Diamin 1) getropft, wobei der pH-Wert bei 1-2 gehalten wurde. Die Reaktionsmischung wurde zwei Stunden bei 5-10°C und 12 h bei Raumtemperatur gerührt. Zu dieser Mischung tropfte man eine Lösung von 0,025 mol 4,4'-Diaminobenzolsulfonsäureanilid (Diamin 2), die nach einem im Prinzip bekannten Verfahren diazotiert wurden, bei 5-10°C zu. Der pH-Wert wurde mit Natronlauge 20 gew.-%ig langsam auf 10-11 angehoben. Man rührte 2 h bei 5-10°C und 12 h bei Raumtemperatur nach, erhitzt zwei Stunden auf 50°C, stellt den pH-Wert mit 37 gew.-%iger Salzsäure auf 1-2 ein und isoliert den ausgefallenen Feststoff.

Analog Beispiel 6 wurden mit den in Tabelle 6 angegebenen Komponenten oligomere Farbstoffe hergestellt.

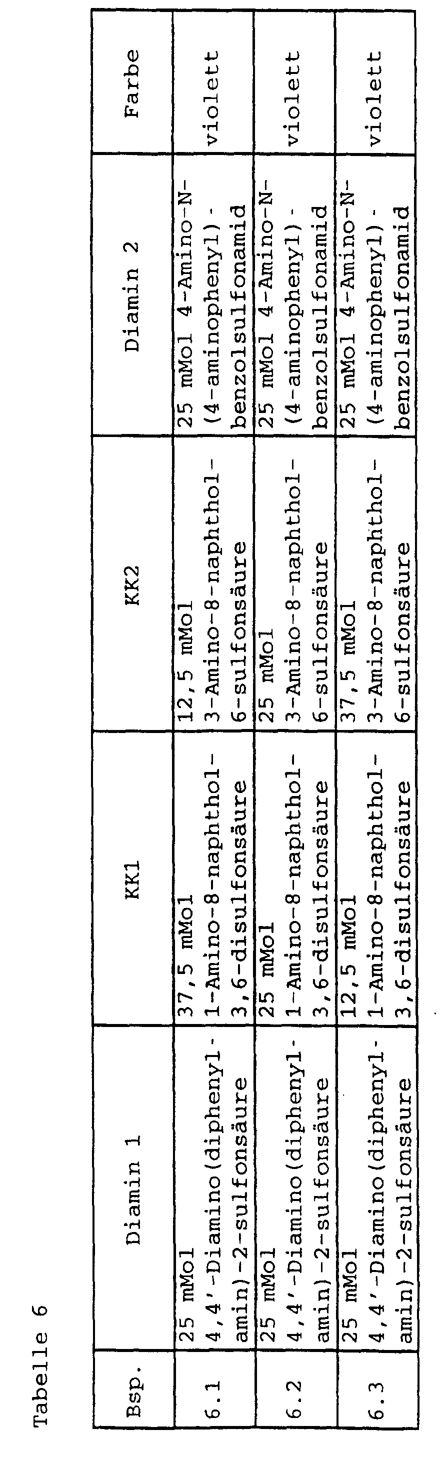

### Beispiel 7 (Polykondensation mit Kupplungskomponente als Molekulargewichtsregler)

0,050 mol 4,4'-Diaminostilben-2,2'-disulfonsäure wurden analog la) diazotiert und der pH-Wert mit Natriumhydrogencarbonat auf 2 eingestellt. In diese eiskalte Mischung wurden 0,0485 mol 1-Amino-8-naphthol-3,6-disulfonsäure bei pH 7 in 200 ml Wasser gelöst zulaufen gelassen. Man rührte 3 h bei pH 2-3, bevor man 0,00243 mol Phenol zugibt. Der pH-Wert wurde dann mit Natronlauge 50 gew.-%ig auf 12,5 angehoben. Es wurde 12 h nachgerührt, eine Stunde auf 50°C aufgeheizt, mit 2N Salzsäure auf pH 1,5 eingestellt und der ausgefallene Feststoff abfiltriert.

### Beispiel 8 (Polykondensation mit Diazokomponente als Molekulargewichtsregler)

0,0475 mol 4,4'-Diaminostilben-2,2'-disulfonsäure wurden analog la) diazotiert. Ebenso wurden 0,005 mol Anilin diazotiert und mit der vorherigen Bisdiazokomponente vereinigt. Man hob den pH-Wert der eiskalten Lösung mit Natriumhydrogencarbonat auf 2 an und läßt 0,0485 mol 1-Amino-8-naphthol-3,6-disulfonsäure, die bei pH 7 in Wasser gelöst wurde, langsam zutropfen. Erst wurde 2,5 h bei pH 3 und 5-10°C dann 12 h bei pH 12-12,5 und Raumtemperatur nachgerührt. Der Ansatz wurde zwei Stunden auf 50°C erhitzt. Der pH-Wert wurde mit Salzsäure 37 % auf 1,5 gesenkt, festes Kaliumchlorid zugegeben und der ausgefallene Feststoff isoliert.

## Patentansprüche

1. Oligomere Azofarbstoffe mit einem alternierenden Aufbau aus Tetrazokomponenten und Kupplungskomponenten, enthaltend im Molekül mindestens 3 Einheiten der Struktur I
--- [D―K] --- (I)
in der D für eine Tetrazokomponente der Formel II 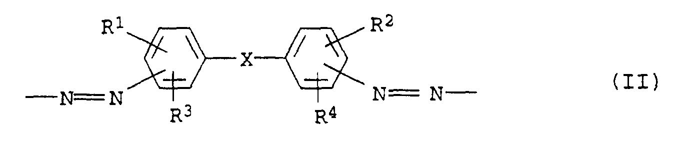 steht, in welcher
x eine direkte Bindung, Sauerstoff, Schwefel oder ein Brückenglied der Formel, -NHCO-, -NHCONH-, -CO-, -NHSO₂-, -SO₂NHSO₂-, -SO₂-, -SO₂-NH-A-NH-SO₂-, -NAlk-CO-, -NAlk-CO-NAlk-, -NAlk-CO-NH-, -NAlk-SO₂-, -SO₂-NAlk-SO₂-, -SO₂-NAlk-A-NAlk-SO₂-, -SO₂-NAlk-A-NH-SO₂-, -CH=CH-, -CH₂CH₂-, -C(CH₃)₂-, -CH₂- oder -NH-
R¹ und R² unabhängig voneinander Wasserstoff, C₁-C₄-Alkyl, C₁-C₄-Alkoxy, C₁-C₄-Alkanoyl, Cyano, Carboxyl, Hydroxysulfonyl, C₁-C₄-Alkoxycarbonyl, Hydroxy, Carbamoyl, Mono- oder Di - (C₁-C₄)-alkylcarbamoyl, Sulfamoyl, Mono- oder Di - (C₁-C₄)-alkylsulfamoyl, Fluor, Chlor, Brom, Nitro oder Trifluormethyl
R³ und R⁴ unabhängig voneinander Wasserstoff, Hydroxysulfonyl oder Carboxyl,
Alk C₁-C₄-Alkyl, das gegebenenfalls mit Hydroxy, Cyano, Mono- oder Di-(C₁-C₄)-alkylamino, Amino, Carboxyl oder Hydroxysulfonyl substituiert ist und gegebenenfalls durch 1 Sauerstoffatom unterbrochen ist und
A Phenylen, das mit Hydroxysulfonyl substituiert sein kann, bedeuten und
in der K einen bivalenten Rest einer Kupplungskomponente der Formel III 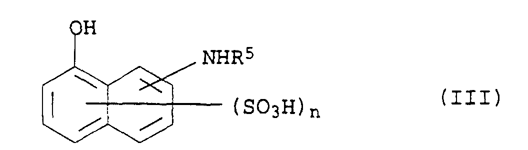 bezeichnet, in der die Variablen folgende Bedeutung haben:
R⁵ Wasserstoff, C₁-C₄-Alkyl, das durch Hydroxy, Cyano, Carboxyl, Hydroxysulfonyl, Methoxycarbonyl, Ethoxycarbonyl oder Acetoxy substituiert sein kann,
n 1 oder 2,
wobei bis zu 90 mol-% der Komponente III durch eine Kupplungskomponente der Formel IV 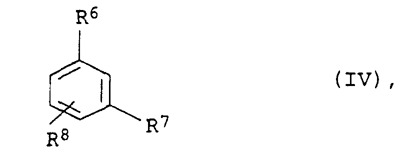 in der
R⁶ und R⁷ unabhängig voneinander Hydroxy, Amino, Morpholino oder einen Rest NHAlk oder N(Alk)₂ und
R⁸ Wasserstoff, Carboxyl, Hydroxysulfonyl, C₁-C₄-Alkyl, C₁-C₄-Alkoxy, C₁-C₄-Alkoxycarbonyl, Carbamoyl, Mono- oder Di - (C₁-C₄)-alkylcarbamoyl, Sulfamoyl, Mono- oder Di- (C₁-C₄) -alkylsulfamoyl oder einen Rest -NHAlk oder -N(Alk)₂ bedeuten,
ersetzt sein können.

2. Oligomere Azofarbstoffe nach Anspruch 1, in denen 10 bis 75 mol-% der Kupplungskomponente III durch eine Kupplungskomponente IV ersetzt sind.

3. Verfahren zur Herstellung oligomerer Azofarbstoffe gemäß Anspruch 1 oder 2, dadurch gekennzeichnet, daß man 1 Mol-Äquivalent eines Diamins der Formel V 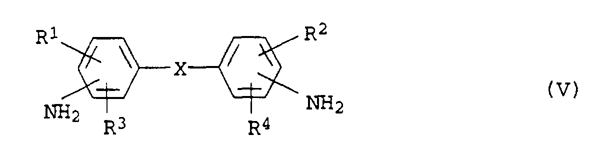 tetrazotiert und mit 0,97 bis 1,03 Mol-Äquivalenten einer Kupplungskomponente III, wobei bis zu 90 mol-% der Komponente III durch eine Komponente IV ersetzt sein können, im sauren Medium kuppelt und anschließend im basischen Medium polykondensiert.

4. Verfahren zur Herstellung oligomerer Azofarbstoffe gemäß Anspruch 1 oder 2, dadurch gekennzeichnet, daß man 1 Moläquivalent eines tetrazotierten Diamins V mit 0,97 bis 1,03 Mol-Äquivalenten einer Kupplungskomponente der Formel VI 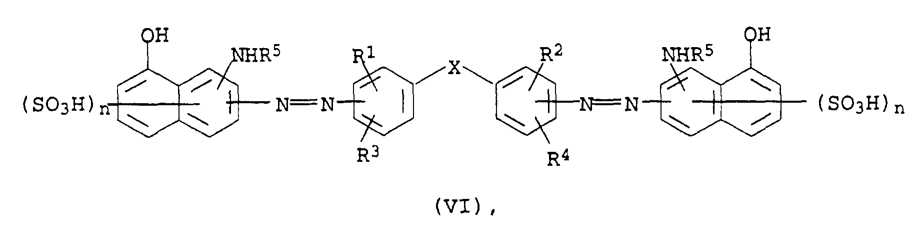 in der R¹, R², X und n die obengenannte Bedeutung haben, im basischen Medium zum Polykondensationsprodukt umsetzt, wobei bis zu 60 mol-% der Komponente VI durch eine Komponente IV ersetzt sein können.

5. Verfahren zur Herstellung oligomerer Azofarbstoffe gemäß Anspruch 1 oder 2, dadurch gekennzeichnet, daß man 1 Moläquivalent eines Diamins V tetrazotiert und mit 1,95 bis 2,05 Moläquivalenten einer Kupplungskomponente III im sauren Medium kuppelt und anschließend y Moläquivalente einer Kupplungskomponente IV zusetzt und die Mischung mit 1 + y Moläquivalenten eines zuvor tetrazotierten Diamins basisch polykondensiert, wobei y für eine Zahl von 0 bis 0,6 steht.

6. Verfahren nach den Ansprüchen 3 bis 5, dadurch gekennzeichnet, daß man der Reaktionsmischung nach der sauren Kupplung k Mol einer einfach kuppelnden Kupplungskomponente bezogen auf 1 Mol Ausgangsdiamin zusetzt und k eine Zahl 0,001 bis 0,05 ist, wobei der Anteil an Kupplungskomponente III um 0,5 k Mol verringert ist.

7. Verfahren nach den Ansprüchen 3 bis 5, dadurch gekennzeichnet, daß man der Reaktionsmischung k Mol einer Diazokomponente bezogen auf 1 Mol Kupplungskomponente zusetzt und k eine Zahl 0,001 bis 0,05 ist, wobei der Anteil an Diamin um 0,5 k Mol verringert ist.

8. Oligomere Azofarbstoffe, erhältlich gemäß den Verfahren der Ansprüche 3 bis 7.

9. Verwendung der oligomeren Azofarbstoffe gemäß Anspruch 1 zum Färben und Bedrucken von natürlichen oder synthetischen Substraten.

## Claims

1. Oligomeric azo dyes having an alternating construction made up of tetrazo components and coupling components, containing in the molecule at least 3 units of the structure I
---[D―K]--- (I)
where D is a tetrazo component of the formula II 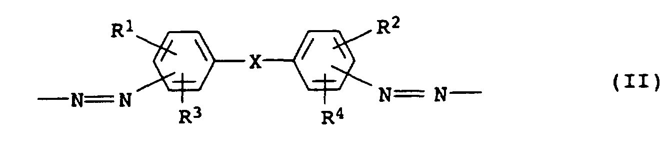 where
x is a direct bond, oxygen, sulfur or a bridge member of the formula -NHCO-, -NHCONH-, -CO-, -NHSO₂-, -SO₂NHSO₂-, -SO₂-, -SO₂-NH-A-NH-SO₂-, -NAlk-CO-, -NAlk-CO-NAlk-, -NAlk-CO-NH-, -NAlk-SO₂-, -SO₂-NAlk-SO₂-, -SO₂-NAlk-A-NAlk-SO₂-, -SO₂-NAlk-A-NH-SO₂-, -CH=CH-, -CH₂CH₂-, -C(CH₃)₂-, -CH₂- or -NH-,
R¹ and R² are each independently of the other hydrogen, C₁-C₄-alkyl, C₁-C₄-alkoxy, C₁-C₄-alkanoyl, cyano, carboxyl, hydroxysulfonyl, C₁-C₄-alkoxycarbonyl, hydroxyl, carbamoyl, mono- or di-(C₁-C₄)-alkylcarbamoyl, sulfamoyl, mono- or di-(C₁-C₄)-alkylsulfamoyl, fluorine, chlorine, bromine, nitro or trifluoromethyl,
R³ and R⁴ are each independently of the other hydrogen, hydroxysulfonyl or carboxyl,
Alk is C₁-C₄-alkyl with or without hydroxyl, cyano, mono- or di-(C₁-C₄)-alkylamino, amino, carboxyl or hydroxysulfonyl substitution and with or without interruption by 1 oxygen atom, and
A is phenylene with or without hydroxysulfonyl substitution, and
where K is a bivalent radical or a coupling component of the formula III 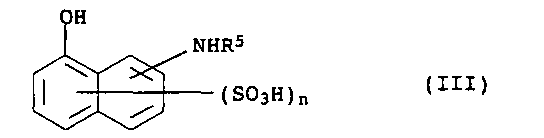 where
R⁵ is hydrogen, C₁-C₄-alkyl with or without hydroxyl, cyano, carboxyl, hydroxysulfonyl, methoxycarbonyl, ethoxycarbonyl or acetoxy substitution, and
n is 1 or 2,
it being possible for up to 90 mol% of component III to be replaced by a coupling component of the formula IV 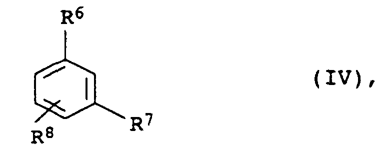 where
R⁶ and R⁷ are each independently of the other hydroxyl, amino, morpholino, NHAlk or N(Alk)₂, and
R⁸ is hydrogen, carboxyl, hydroxysulfonyl, C₁-C₄-alkyl, C₁-C₄-alkoxy, C₁-C₄-alkoxycarbonyl, carbamoyl, mono- or di-(C₁-C₄)-alkylcarbamoyl, sulfamoyl, mono- or di-(C₁-C₄)-alkylsulfamoyl, -NHAlk or -N(Alk)₂.

2. Oligomeric azo dyes as claimed in claim 1, wherein from 10 to 75 mol% of coupling component III are replaced by a coupling component IV.

3. A process for preparing oligomeric azo dyes as claimed in claim 1 or 2, which comprises tetrazotizing 1 mol equivalent of a diamine of the formula V 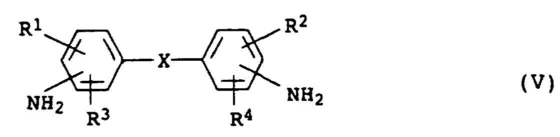 and coupling the product with from 0.97 to 1.03 mol equivalents of a coupling component III, it being possible for up to 90 mol% of component III to be replaced by a component IV, in an acidic medium and then polycondensing the product in a basic medium.

4. A process for preparing oligomeric azo dyes as claimed in claim 1 or 2, which comprises reacting 1 mol equivalent of a tetrazotized diamine V with from 0.97 to 1.03 mol equivalents of a coupling component of the formula VI 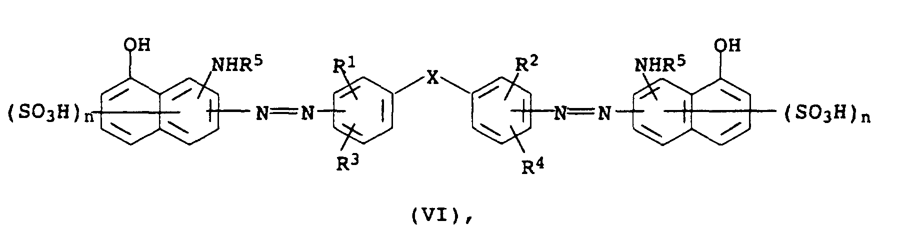 where R¹, R², X and n are each as defined above, in a basic medium to form a polycondensation product, it being possible for up to 60 mol% of component VI to be replaced by a component IV.

5. A process for preparing oligomeric azo dyes as claimed in claim 1 or 2, which comprises tetrazotizing 1 mol equivalent of a diamine V and coupling the product with from 1.95 to 2.05 mol equivalents of a coupling component III in an acidic medium and then adding y mol equivalents of a coupling component IV and polycondensing the mixture with 1 + y mol equivalents of a previously tetrazotized diamine under basic conditions, y being from 0 to 0.6.

6. A process as claimed in any of claims 3 to 5, wherein k mol of a singly coupling coupling component, based on 1 mol of starting diamine, is added to the reaction mixture after the acidic coupling, k being from 0.001 to 0.05 and the proportion of coupling component III being diminished by 0.5 k mol.

7. A process as claimed in any of claims 3 to 5, wherein k mol of a diazo component, based on 1 mol of coupling component, is added to the reaction mixture, k being from 0.001 to 0.05 and the proportion of diamine being diminished by 0.5 k mol.

8. Oligomeric azo dyes obtainable by the processes of claims 3 to 7.

9. The use of the oligomeric azo dyes of claim 1 for dyeing and printing natural or synthetic substrates.

## Revendications

1. Colorants azoïques oligomères ayant une construction alternée à base de composants tétrazoïques et de composants de couplage, contenant dans la molécule, au moins 3 motifs de structure I
--- [D―K] --- (I)
dans laquelle D est mis pour un composant tétrazoïque de formule II 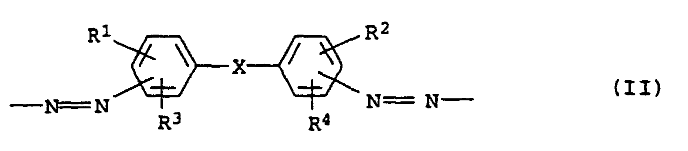 dans lequel
x représente une liaison directe, un atome d'oxygène, de soufre ou un maillon pontant de formule -NHCO-, -NHCONH-, -CO-, -NHSO₂-, -SO₂NHSO₂-, -SO₂-, -SO₂-NH-A-NH-SO₂, -NAlk-CO-, -NAlk-CO-NAlk-, -NAlk-CO-NH-, -NAlk-SO₂-, -SO₂-NAlk-SO₂-, -SO₂-NAlk-A-NAlk-SO₂-, -SO₂-NAlk-A-NH-SO₂-, -CH=CH-, -CH₂CH₂-, -C(CH₃)₂-, -CH₂- ou -NH-,
R¹ et R² représentent indépendamment l'un de l'autre un atome d'hydrogène, un groupement alkyle en C₁-C₄, alcoxy en C₁-C₄, alcanoyle en C₁-C₄, cyano, carboxyle, hydroxysulfonyle, alcoxycarbonyle en C₁-C₄, hydroxy, carbamoyle, mono ou di(alkyle en C₁-C₄)carbamoyle, sulfamoyle, mono ou di(alkyle en C₁-C₄)sulfamoyle, un atome de fluor, chlore, brome, un groupement nitro ou trifluorométhyle,
R³ et R⁴ représentent indépendamment l'un de l'autre un atome d'hydrogène, un groupement hydroxysulfonyle ou carboxyle,
Alk représente un groupement alkyle en C₁-C₄, pouvant être substitué par des groupements hydroxy, cyano, mono ou di(alkyle en C₁-C₄)amino, amino, carboxyle ou hydroxysulfonyle, et pouvant être interrompu par un 1 atome d'oxygène et
A représente un groupement phénylène pouvant être substitué par un groupement hydroxysulfonyle, et
dans laquelle K représente un reste bivalent d'un composant de couplage de formule III 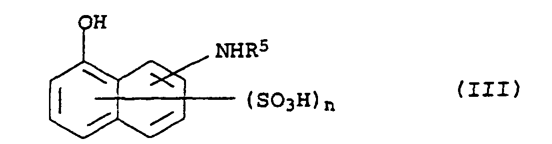 dans laquelle les variables ont les significations suivantes :
R⁵ représente un atome d'hydrogène, un groupement alkyle en C₁-C₄, pouvant être substitué par des groupements hydroxy, cyano, carboxyle, hydroxysulfonyle, méthoxycarbonyle, éthoxycarbonyle ou acétoxy,
n représente 1 ou 2,
où jusqu'à 90% en moles du composant III peuvent être remplacés par un composant de couplage de formule IV 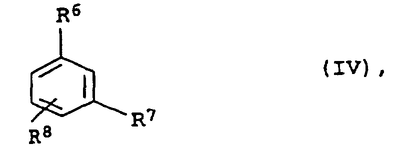 dans laquelle
R⁶ et R⁷ représentent indépendamment l'un de l'autre un groupement hydroxy, amino, morpholino ou un reste NHAlk ou N(Alk)₂ et
R⁸ représente un atome d'hydrogène, un groupement carboxyle, hydroxysulfonyle, alkyle en C₁-C₄, alcoxy, en C₁-C₄, alcoxycarbonyle en C₁-C₄, carbamoyfe, mono ou di(alkyle en C₁-C₄)carbamoyle, sulfamoyle, mono ou di(alkyle en C₁-C₄)sulfamoyle ou un reste -NHAlk ou N(Alk)₂.

2. Colorants azoïques oligomères selon la revendication 1, dans lesquels 10 à 75% en moles du composant de couplage III peuvent être remplacés par un composant de couplage IV.

3. Procédé de préparation de colorants azoïques oligomères selon la revendication 1 ou 2, caractérisé en ce que l'on tétrazoïse l'équivalent d'une mole d'une diamine de formule V 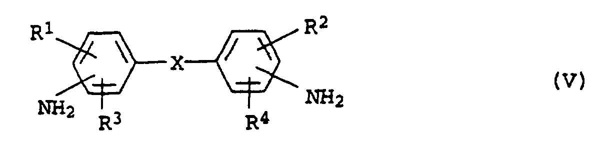 et qu'on la couple en milieu acide avec 0,97 à 1,03 équivalents de mole d'un composant de couplage III, où jusqu'à 90% en moles du composant III peuvent être remplacés par un composant IV, suivie d'une polycondensation en milieu basique.

4. Procédé de préparation de colorants azoïques oligomères selon la revendication 1 ou 2, caractérisé en ce que, pour obtenir un produit de polycondensation, on fait réagir en milieu basique l'équivalent d'une mole d'une diamine tétrazoïque V avec 0,97 à 1,03 équivalents de mole d'un composant de couplage VI 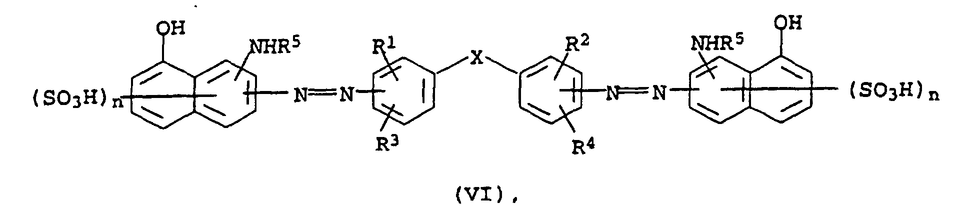 dans laquelle R¹, R², X et n ont la signification mentionnée ci-dessus, où jusqu'à 60% en moles du composant VI peuvent être remplacés par un composant IV.

5. Procédé de préparation de colorants azoïques oligomères selon la revendication 1 ou 2, caractérisé en ce que l'on tétrazoïse l'équivalent d'une mole d'une diamine V et qu'on la couple en milieu acide avec 1,95 à 2,05 équivalents de mole d'un composant de couplage III, et on ajoute ensuite y équivalents de mole d'un composant de couplage IV, et l'on polycondense le mélange en milieu basique avec 1 + y équivalents de mole d'une diamine préalablement tétrazoïsée, y représentant un nombre de 0 à 0,6.

6. Procédé selon l'une quelconque des revendications 3 à 5, caractérisé en ce que l'on ajoute au mélange réactionnel, après le couplage acide, k moles d'un composant de couplage à couplage simple pour 1 mole de diamine de départ, k représentant un nombre de 0,001 à 0,05, et la proportion de composant de couplage III étant diminuée de 0,5 k moles.

7. Procédé selon l'une quelconque des revendications 3 à 5, caractérisé en ce que l'on ajoute au mélange réactionnel k moles d'un composant diazoïque pour 1 mole de composant de couplage, k représentant un nombre de 0,001 à 0,05, et la proportion en diamine étant diminuée de 0,5 k moles.

8. Colorants azoïques oligomères obtenus par le procédé selon l'une quelconque des revendications 3 à 7.

9. Utilisation de colorants azoïques oligomères selon la revendication 1 pour la teinture et l'impression de substrats naturels ou synthétiques.
